# EUROPEAN PATENT APPLICATION

(11) **EP 2 963 666 A1**
(43) Date of publication of application: **06.01.2016**
(21) Application number: 15165871.3
(22) Date of filing: 30.04.2015
(51) Int. Cl.: H01H 47/00, H02J 3/38, H02M 7/48, H01H 3/00

(54) **SYSTEM INTERCONNECTION DEVICE FOR DECENTRALIZED POWER SUPPLY**

(30) Priority: 30.06.2014 JP 2014134387
(71) Applicant: AISIN SEIKI KABUSHIKI KAISHA, Kariya-shi, Aichi 448-8650 (JP)
(72) Inventor: NAOI, Norihiro, Kariya-shi,, Aichi 448-8650 (JP); YAI, Katsunori, Kariya-shi,, Aichi 448-8650 (JP)
(74) Representative: TBK

(57) **Abstract**

A system interconnection device (10) for a decentralized power supply includes a power generation device (11), an alternating-current system power supply (20), a plurality of electric wires (21, 22), an inverter (13), a reactor (14a, 14b), a connection electric wire (23), a condenser (14c), a plurality of normally-open type first and second switches (15a, 15b), a loop circuit (A) and a control unit (16) controlling the switch (15a, 15b) to be open and closed. The control unit (16) includes a welding determination portion (16) determining that a contact point of the first switch (15a, 15b) is welded in a case where a current flows in the loop circuit (A) when the control unit (16) commands the first switch (15a, 15b) of the switches (15a, 15b) provided at the loop circuit (A) to be open, the first switch (15a, 15b) serving as a subject of determination being determined whether the contact point is welded, and commands the second switch (15a, 15b) to be closed, and when the control unit (16) applies a voltage to the loop circuit (A).

## Description

### TECHNICAL FIELD

This disclosure generally relates to a system interconnection device for a decentralized power supply.

### BACKGROUND DISCUSSION

One form of a system interconnection device for a decentralized power supply is disclosed in JP2011-135767A (hereinafter referred to as Patent reference 1). As disclosed in

Patent reference 1, the system interconnection device is configured with a power generation device (a solar cell 1), an inverter, reactors, a condenser, normally-open type switches, a loop circuit, and a control unit. The power generation device generates a direct-current power. The inverter converts the direct-current power generated by the power generation device into an alternating-current power and outputs the alternating-current power from each of output terminals to each of plural electric wires, the output terminals being connected to the plural electric wires corresponding to plural phases of an alternating-current system power supply. The reactors are provided at the electric wires, respectively. The condenser is provided at a connection electric wire that is positioned between the reactors and the system power supply and that connects two electric wires of the electric wires. The normally-open type switches are provided at the electric wires, respectively, the switches being positioned between, the connection points of the electric wires and the connection electric wire, and the system power supply. The loop circuit is configured with the two electric wires, the connection electric wire, the reactors, the condenser and the switches. The control unit controls the switches to be open and closed. The system interconnection device includes a first electric potential difference detection circuit and a second electric potential difference detection circuit for determining the contact state of the switches.

According to the system interconnection device for a decentralized power supply disclosed in Patent reference 1, even if the determination whether a contact point of each of the switches is welded can be operated separately, there is an issue of an increase in cost because the first and second electric potential difference detection circuits are additionally provided for determining whether the contact points of the switches are welded.

A need thus exists for a system interconnection device for a decentralized power supply that determines whether switches are welded separately without an increase in cost.

### SUMMARY

According to an aspect of this disclosure, a system interconnection device for a decentralized power supply includes a power generation device generating a direct-current power, an alternating-current system power supply, plural electric wires corresponding to plural phases of the alternating-current system power supply, respectively, an inverter converting the direct-current power generated by the power generation device into an alternating-current power, the inverter outputting the alternating-current power from each of the output terminals of the inverter to each of the plural electric wires, the output terminals being connected to the plural electric wires, a reactor being provided at the electric wire, a connection electric wire being positioned between the reactor and the system power supply, the connection electric wire connecting two electric wires of the plural electric wires, a condenser being positioned between the reactor and the system power supply, the condenser being provided at the connection electric wire, plural normally-open type first and second switches being provided at the electric wires, respectively, the normal-open type switch being positioned between, a connection point of the electric wire and the connection electric wire, and the inverter, a loop circuit including the two electric wires, the connection electric wire, the reactor, the condenser, and the switches, and a control unit controlling the switch to be open and closed. The control unit includes a welding determination portion determining that a contact point of the first switch is welded in a case where a current flows in the loop circuit when the control unit commands the first switch of the switches provided at the loop circuit to be open, the first switch serving as a subject of determination being determined whether the contact point is welded, and commands the second switch to be closed, and when the control unit applies a voltage to the loop circuit.

According to the aforementioned construction of this disclosure, the normally-open type first and second switches are provided at the electric wires, respectively, the electric wires that are positioned between the inverter and the system power supply. The switch is positioned between, the connection point of the electric wire and the connection wire, and the inverter. The plurality of the first and second normally-open type switches are positioned on the loop circuit. As a result of this construction, for example, when the control unit commands the first switch to be open and commands the second switch to be closed, and when the voltage is applied to the loop circuit in a case where the first switch of the first and second switches provided at the loop circuit is welded and the second switch of the first and second switches is not welded, the current flows in the loop circuit. Thus, the control unit (the welding determination portion) determines that the contact point of the first switch is welded by the use of the components that are mounted to the system interconnection device. Accordingly, the system interconnection device for the decentralized power supply can determine whether the first and second switches are welded separately, without an increase in cost.

According to another aspect of this disclosure, the system interconnection device for the decentralized power supply further includes a current sensor being positioned on the loop circuit and a voltage sensor detecting a direct-current voltage inputted to the inverter. The control unit includes a loop current determination portion determining whether the current flows in the loop circuit. The loop current determination portion determines whether the current flows in the loop circuit from detection results of at least one of the current sensor and the voltage sensor.

According to the aforementioned construction of this disclosure, the control unit (the loop current determination portion) securely determines whether the current flows in the loop circuit by the use of the components that are mounted to the system interconnection device. Further, the control unit securely determines whether the first and second switches are welded.

According to still another aspect of this disclosure, the switch is positioned between the reactor and the connection point.

According to aforementioned construction of this disclosure, because the voltage that flows at a position close to the system power supply relative to the reactor is lower than the voltage that flows at a position close to the inverter relative to the reactor, the withstand voltage of the first and second switches can be low.

According to still further aspect of this disclosure, the control unit changes a duty ratio of a voltage pulse in response to a phase of the voltage of the system power supply, the control unit applying the voltage to the loop circuit.

According to the aforementioned construction of this disclosure, by changing the duty ratio of the voltage pulse in response to the phase (and/or the voltage value) of the voltage of the system power supply and by controlling the inverter to apply the voltage to the loop circuit, the control unit securely determines whether the current flows in the loop circuit by preventing an overcurrent by inhibiting the change of the current caused by a phase shift.

According to still another aspect of this disclosure, the system interconnection device for the decentralized power supply further includes a converter boosting the direct-current power generated by the power generation device, the converter outputting the direct-current power to the inverter and the voltage sensor detecting a direct-current voltage inputted to the inverter. The control unit includes a loop current determination portion determining whether the current flows in the loop circuit. The loop current determination portion determines whether the current flows in the loop circuit from detection results of the voltage sensor. The welding determination portion determines that the contact point of the first switch is welded in a case where the direct-current voltage is equal to or greater than the predetermined voltage after a start-up of the converter.

According to the aforementioned construction of this disclosure, by determining that the contact point of one switch is welded in a case where the DC voltage comes to be equal to or greater than the predetermined voltage after the start-up of the converter, the control unit securely determines whether the contact point is welded in a case where the control unit determines whether the contact point is welded from the detection results of the DC voltage inputted from the converter to the inverter.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a view schematically illustrating a system interconnection device for a decentralized power supply according to an embodiment of this disclosure;
Fig. 2 is a flowchart of a control program (a main program) executed by a control unit shown in Fig. 1;
Fig. 3 is a flowchart of a control program (a subroutine for determining whether switches are welded) executed by the control unit shown in Fig. 1;
Fig. 4 shows graphs showing a relationship of a voltage of a system power supply, on/off states of a first switching element and a fourth switching element, an output current of an inverter and an intermediate direct-current voltage in a state where the switch (parallel-off relay) shown in Fig. 1 is welded. The first row shows the voltage of the system power supply. The second row shows the on-off states of the first and fourth switching elements. The third row shows the output current of the inverter. The fourth row shows the intermediate direct-current voltage; and
Fig. 5 is a flowchart of a control program (a subroutine of determining whether switches are welded) executed by the control unit shown in Fig.1 according to a modified example.

### DETAILED DESCRIPTION

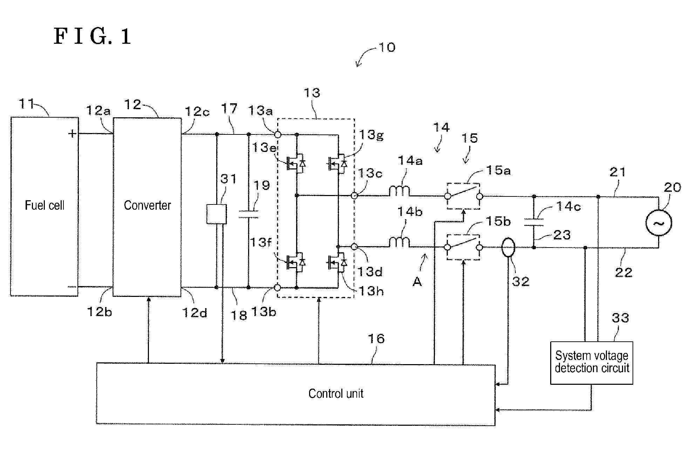

An embodiment of a system interconnection device for a decentralized power supply of this disclosure will be explained. As shown in Fig. 1, a system interconnection device 10 interconnects and releases the interconnection of a fuel cell 11 (i.e., serving as a power generation device) and an alternating-current system power supply 20 or an AC system power supply 20. The system interconnection device 10 is provided with the fuel cell 11 serving as the power generation device, a converter 12, an inverter 13, a smoothing circuit 14, parallel-off relays 15 (i.e., serving as a plurality of first and second switches) and a control unit 16.

The fuel cell 11 corresponds to the power generation device that generates a direct-current power or a DC power. The power generation device may be, for example, a solar cell or a gas engine that generates the DC power instead of the fuel cell 11. The converter 12 boosts the DC power generated by the fuel cell 11 and outputs the DC power to the inverter 13. The converter 12 is configured with a reactor, a switching element, for example, an insulated gate bipolar transistor or an IGBT, a diode and a condenser. A first input terminal 12a of the converter 12 is connected to a cathode of the fuel cell 11. A second input terminal 12b of the converter 12 is connected to an anode of the fuel cell 11.

A first output terminal 12c of the converter 12 is connected to a first input terminal 13a of the inverter 13 via an electric wire 17. A second output terminal 12d of the converter 12 is connected to a second input terminal 13b of the inverter 13 via an electric wire 18. A voltage sensor 31 measuring an output voltage (the DC voltage) of the converter 12 is provided between the electric wires 17, 18. Detection signals detected by the voltage sensor 31 are inputted to the control unit 16. By applying a pulse signal having a duty ratio that is determined by arithmetic processing to a gate of the switching element, the control unit 16 operates a feedback control that makes the output voltage of the converter 12 be a predetermined voltage. A condenser 19 is provided between the electric wires 17, 18.

The inverter 13 converts the DC power transmitted from the converter 12, that is, the DC power generated by the fuel cell 11, into the AC power and outputs the AC power to the system power supply 20. The inverter 13 includes the first and second input terminals 13a, 13b, a first output terminal 13c and a second output terminal 13d. The first output terminal 13c of the inverter 13 is connected to an electric wire 21 being connected to the system power supply 20 (for example, U-phase). The second output terminal 13d of the inverter 13 is connected to an electric wire 22 being connected to the system power supply 20 (for example, V-phase). Each of the first and second output terminals 13c, 13d is connected to each of the electric wires 21, 22 that support plural phases of the system power supply 20.

The inverter 13 includes first, second, third and fourth switching elements 13e, 13f, 13g, 13h that are examples of the IGBT and that are connected in a full-bridge configuration. The first and second switching elements 13e, 13f are positioned between the first and second input terminals 13a, 13b and are connected in series. A connection point of the first and second switching elements 13e, 13f is connected to the first output terminal 13c. The third and fourth switching elements 13g, 13h are positioned between the first and second input terminals 13a, 13b and are connected in series. The third and fourth switching elements 13g, 13h are connected with each other and are positioned in parallel with the first and second switching elements 13e, 13f. A connection point of the third and fourth switching elements 13g, 13h is connected to the second output terminal 13d.

The operation of the inverter 13 is controlled by the control unit 16. Specifically, the inverter 13 switches the first, second, third and fourth switching elements 13e, 13f, 13g, 13h in response to a pulse width modulation control or a PWM control by the control unit 16, and converts the DC power transmitted from the converter 12 into the AC power. As such, the inverter 13 outputs the converted AC power to the electric wires 21, 22.

The smoothing circuit 14 is configured with a first reactor 14a, a second reactor 14b and a condenser 14c. The first and second reactors 14a, 14b are provided at the electric wires 21, 22, respectively. Alternatively, the first reactor 14a or the second reactors 14b can be provided at one of the electric wires 21, 22. That is, the first reactor 14a (or the second reactor 14b) can be provided at at least one of the electric wires 21, 22 that configure a loop circuit A. The condenser 14c is disposed at a connection electric wire 23 that is positioned between a set of the first and second reactors 14a, 14b and the system power supply 20 and that connects the electric wires 21, 22. The smoothing circuit 14 removes a high-frequency component of the AC power outputted from the inverter 13 and converts an output current of the inverter 13 into a current having a form of sine wave. Then, the smoothing circuit 14 outputs the output voltage to the system power supply 20.

The parallel-off relays (relay for the system interconnection) 15 are configured with a first parallel-off relay 15a and a second parallel-off relay 15b. The parallel-off relays 15 serve as switches provided at the electric wires 21, 22, respectively, and serve as normally-open type switches positioned between, a set of the connection points of the electric wires 21, 22 and the connection electric wire 23, and the inverter 13. The first parallel-off relay 15a is positioned between, a first connection point of the electric wire 21 and the connection electric wire 23, and the first reactor 14a. The second parallel-off relay 15b is positioned between, a second connection point of the electric wire 22 and the connection electric wire 23, and the first reactor 14a. The control unit 16 controls operations (closing and opening) of the first and second parallel-off relays 15a, 15b by control signals.

Specifically, the first parallel-off relay 15a is positioned at the electric wire 21 that serves as a first electric wire of the electric wires 21, 22. The second parallel-off relay 15b is positioned at the electric wire 22 that serves as a second electric wire of the electric wires 21, 22. When the first and second parallel-off relays 15a, 15b come to be in a connected (closed) state or when each of the first and second parallel-off relays 15a, 15b is closed, the system interconnection device 10 and the system power supply 20 are interconnected. When the first and second parallel-off relays 15a, 15b come to be in an open state or when each of the first and second parallel-off relays 15a, 15b is open, the interconnection of the system interconnection device 10 and the system power supply 20 is released. As such, by controlling the parallel-off relays 15, the control unit 16 interconnects and releases the interconnection of the system interconnection device 10 and the system power supply 20 and controls the power supply.

The loop circuit A is configured with the two electric wires 21, 22, the connection electric wire 23, the first and second reactors 14a, 14b, the condenser 14c, and the first and second parallel-off relays 15a, 15b. In particular, the loop circuit A is configured with a first portion, the connection electric wire 23, and a second portion to be formed in a loop shape. The first portion is provided at the electric wire 21 and is positioned at a portion from the first output terminal 13c of the inverter 13 to the connection point of the electric wire 21 and the connection electric wire 23. The second portion is provided at the electric wire 22 and is positioned at a portion from the second output terminal 13d of the inverter 13 to the connection point of the electric wire 22 and the connection electric wire 23.

The loop circuit A is provided with a current sensor 32 (for example, a current transformer-type, or a shunt-type current sensor) that detects the current flowing in the circuit A. Detection signals detected by the current sensor 32 are inputted to the control unit 16. The respective electric wires 21, 22 are connected with a system voltage detection circuit 33 that detects a system voltage or a voltage of the system power supply 20. Detection signals detected by the system voltage detection circuit 33 are inputted to the control unit 16.

The control unit 16 at least controls the parallel-off relays 15 to be open and closed. The control unit 16 includes a microcomputer that is provided with an input/output interface, a central processing unit or a CPU, a Random Access Memory or a RAM, and a Read Only Memory, or a ROM that are connected with one another via buses. The CPU executes various programs and receives detection results detected by the voltage sensor 31, the current sensor 32 and the system voltage detection circuit 33. The CPU controls the converter 12 and the inverter 13. The CPU controls the parallel-off relays 15 to be open and closed. The RAM temporarily stores variables that are required to execute the programs. The ROM stores the programs.

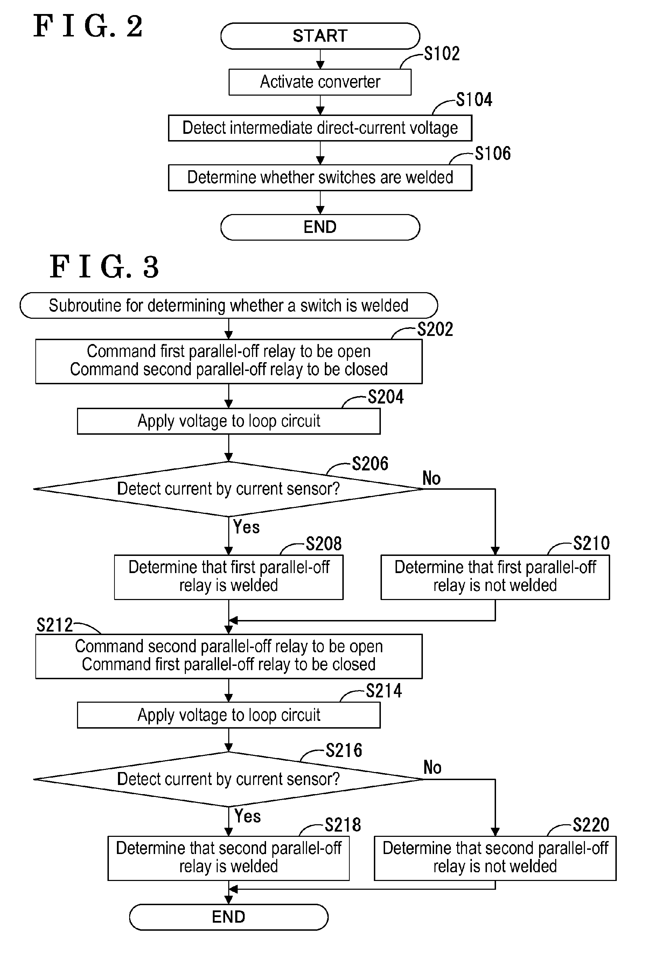

Next, a determination whether the switches provided at the above-configured system interconnection device 10 for the decentralized power supply are welded will be explained with reference to flowcharts shown in Figs. 2 and 3. The control unit 16 repeatedly executes a program which is shown in the flowchart at every predetermined time (the predetermined time may correspond to either a short time or a long time). The determination whether the switches are welded is favorably performed before the fuel cell 11 starts generating power (after a start-up is completed). That is, the determination whether the switches are welded is favorably operated before the interconnection (normal interconnection) of the fuel cell 11 and the system power supply 20. The normal interconnection does not include an on state of the parallel-off relays 15 when the control unit 16 determines whether the switches are welded.

The control unit 16 starts the activation of the converter 12 in step S102 in Fig. 2. At this time, the fuel cell 11 is completed with the activation and is able to generate the power. When the converter 12 is activated, the converter 12 boosts the DC power generated by the fuel cell 11 and outputs the DC power to the inverter 13. The DC power outputted from the converter 12 corresponds to an intermediate DC voltage. The control unit 16 controls the intermediate DC voltage to be set at a value that exceeds the maximum value of the system voltage or the voltage of the system power supply 20.

The control unit 16 controls the voltage sensor 31 to detect the intermediate DC voltage in step S104. In a case where the measured intermediate DC voltage is equal to or greater than a predetermined voltage that exceeds the maximum value of the system voltage or the voltage of the system power supply 20, the program proceeds to step S106 and the control unit 16 determines whether the parallel-off relays 15 are welded. In a case where the measured intermediate DC voltage is lower than the predetermined voltage, the control unit 16 does not determine whether the parallel-off relays 15 are welded.

In step S106, the control unit 16 determines whether the parallel-off relays 15 are welded. Specifically, the control unit 16 performs a subroutine for determination whether the parallel-off relays are welded shown in Fig. 3. Meanwhile, the output (the normal output) of the inverter 13 is in a stopped state. In step S202, the control unit 16 commands the first parallel-off relay 15a to be open and commands the second parallel-off relay 15b to be closed.

In step S204, the control unit 16 controls the inverter 13 to apply the voltage to the loop circuit A. That is, the control unit 16 controls the inverter 13 to apply a pulse-shaped voltage (voltage pulse; the voltage pulse can include either a single waveform or multiple waveforms) to the loop circuit A in accordance with a phase (or a phase and a voltage value) of the voltage of the system power supply 20. Specifically, the control unit 16 controls the first and fourth switching elements 13e, 13h to be switched on simultaneously at a first predetermined time (for example, a time corresponding to a half cycle of the voltage pulse(several ten micro seconds)). At the same time, the control unit 16 controls the second and third switching elements 13f, 13g to be switched off simultaneously. Then, the control unit 16 controls the first, second, third, and fourth switching elements 13e, 13f, 13g, 13h to be switched off simultaneously at a second predetermined time. Accordingly, the voltage with single waveform transmitted from the inverter 13 is applied to the loop circuit A. In order to apply the multiple waveform voltage to the loop circuit A, the control unit 16 may repeatedly control the switching elements. Further, the control unit 16 may control the first and fourth switching elements 13e, 13h to be switched off simultaneously while controlling the second and third switching elements 13f, 13g to be switched on simultaneously.

When the voltage is applied to the loop circuit A in a state where the parallel-off relays 15 are welded, the current flowing in the loop circuit A is defined by the voltage difference of the voltage of the system power supply 20 (system voltage) and the input voltage of the inverter 13, and by the inductance of the first and second reactors 14a, 14b. Therefore, because the current flowing in the loop circuit A is changed in response to the phase of the system voltage or the voltage of the system power supply 20 when the voltage is applied to the loop circuit A and in response to the voltage pulse width of the applied voltage, the voltage applied from the inverter 13 is required to include the phase and the voltage pulse width that prevent an overcurrent.

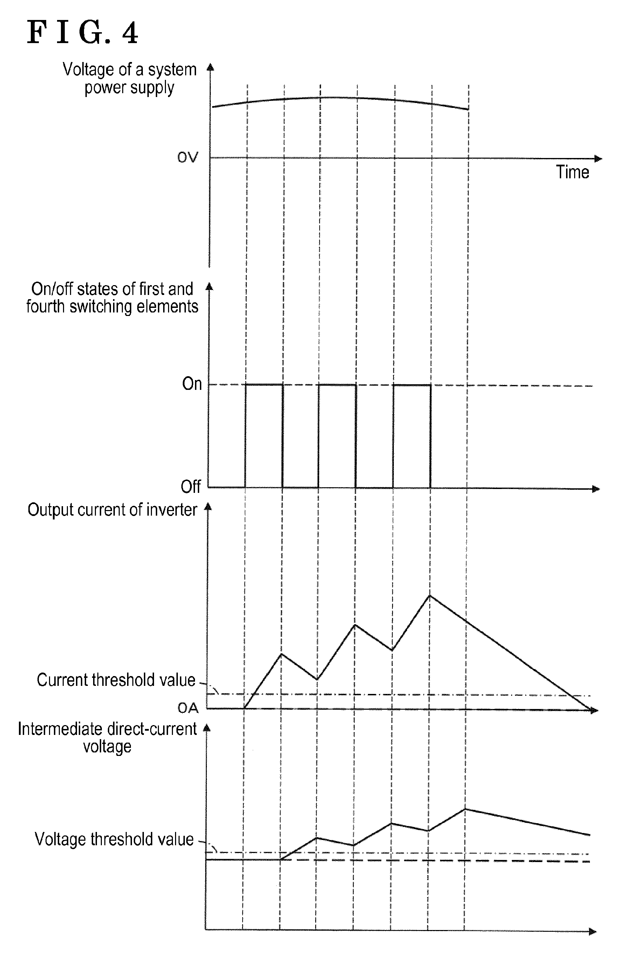

In a case where the current flows in the loop circuit A, the control unit 16 determines that the contact point of the parallel-off relay (i.e., serving as a parallel-off relay that is a subject of determination or a first switch) (the first parallel-off relay 15a in Fig. 4) of the parallel-off relays 15 which are provided at the loop circuit A is welded (step S208), the one parallel-off relay that is a subject of determination whether the contact point is welded. In a case where the current does not flow in the loop circuit A, the control unit 16 determines that the contact point of the parallel-off relay that is the subject of determination is not welded (step S210).

Specifically, in step S206, in a case where the current value received from the current sensor 32 is equal to or greater than a current threshold value, the control unit 16 determines that the current is detected by the current sensor 32, that is, that the current flows in the loop circuit A. In step S206, the control unit 16 determines whether the current flows in the loop circuit A. Meanwhile, the current threshold value is favorably set at a value that is equal to or greater than a resolution of the current sensor 32. Further, the current threshold value may be set in accordance with the voltage difference between the voltage of the system power supply 20 (system voltage) and the voltage inputted from the inverter 13, and in accordance with the inductance of the first reactor 14a (or the second reactor 14b) when the voltage is applied to the loop circuit A in a state where the parallel-off relays 15 are welded.

In a case where the current flows in the loop circuit A, the control unit 16 determines that the current is detected by the current sensor (YES in step S206) and that the contact point of the first parallel-off relay 15a is welded (step S208). On the other hand, in a case where the current does not flow in the loop circuit A, the control unit 16 determines that the current is not detected by the current sensor (NO in step S206) and that the contact point of the first parallel-off relay 15a is not welded (step S210).

Reasons why the determination whether the parallel-off relays 15 are welded is performed will be explained with reference to Fig. 4. When the pulse-shaped voltage is applied from the inverter 13 to the loop circuit A in a case where one of the first and second parallel-off relays 15a, 15b is in an off-state (open state), the current does not flow in the loop circuit A. Thus, the output current of the inverter 13 is assumed to be zero ampere, or 0A. The intermediate DC voltage is assumed to be a predetermined intermediate DC voltage which is not changed from a voltage before the determination whether the parallel-off relays 15 are welded.

When the inverter 13 applies the pulse-shaped voltage to the loop circuit A in a case where both of the first and second parallel-off relays 15a, 15b are in an on-state (closed state), the current flows in the loop circuit A. Thus, the output current of the inverter 13 gradually increases in response to an action of the condenser 14c and comes to be greater than the current threshold value. At the same time, the intermediate current voltage gradually increases to be greater than a voltage threshold value (a value greater than the intermediate DC voltage).

Further, when the second parallel-off relay 15b receives the command to be closed while the first parallel-off relay 15a receives the command to be open in a case where the contact points of the first and second parallel-off relays 15a, 15b are not welded, the second parallel-off relay 15b is turned on (closed state) while the first parallel-off relay 15a is turned off (open state). The open state of the first parallel-off relay 15a and the closed state of the second parallel-off relay 15b correspond to a case where one of the first and second parallel-off relays 15a, 15b is in the off state (open state). In such a state, in a case where the pulse-shaped voltage is applied from the inverter 13 to the loop circuit A, the current does not flow in the loop circuit A. Thus, the output current of the inverter 13 is assumed to be 0A. The intermediate current voltage is assumed to be the predetermined intermediate DC voltage.

On the other hand, in a case where the contact point of the first parallel-off relay 15a is welded, the first parallel-off relay 15a is maintained in the on state (closed state) even if the first parallel-off relay 15a receives the command to be open. In a case where the contact point of the second parallel-off relay 15b is not welded, the second parallel-off relay 15b is turned to be on. In a case where the contact point of the second parallel-off relay 15b is welded, the second parallel-off relay 15b is maintained on. In either case, the second parallel-off relay 15b is in the on state (closed state). The on state of the second parallel-off relays 15b corresponds to a case where the first and second parallel-off relays 15a, 15b are in the on state (closed state). When the pulse-shaped voltage is applied from the inverter 13 to the loop circuit A in a case where the first and second parallel-off relays 15a, 15b are in the on state, the current flows in the loop circuit A. Thus, the output current of the inverter 13 comes to be greater than the voltage threshold value. The intermediate current voltage comes to be greater than the voltage threshold value.

Similarly to the aforementioned first parallel-off relay 15a, the control unit 16 determines whether the second parallel-off relay 15b is welded from step S212 to step S220. Specifically, the control unit 16 commands the first parallel-off relay 15a to be closed while commanding the second parallel-off relay 15b to be open in step S212. In step S204, the control unit 16 controls the inverter 13 to apply the voltage to the loop circuit A. In step S216, the control unit 16 determines whether the current flows in the loop circuit A. In a case where the current flows in the loop circuit A, the control unit 16 determines that the contact point of the parallel-off relay (i.e., serving as a parallel-off relay that is the subject of determination is welded) (the second parallel-off relay 15b in Fig. 4) (step S218). On the other hand, in a case where the current does not flow in the loop circuit A, the control unit 16 determines that the contact point of the second parallel-relay 15b is not welded (step S 220).

As is clear from the aforementioned embodiment, the system interconnection device 10 for a decentralized power supply includes the power generation device (the fuel cell 11) generating the direct-current power, the alternating-current system power supply 20, the plural electric wires 21, 22 corresponding to the plural phases of the alternating-current system power supply 20, respectively, the inverter 13 converting the direct-current power generated by the power generation device (the fuel cell 11) into the alternating-current power, the inverter 13 outputting the alternating-current power from each of the output terminals 13c, 13d of the inverter 13 to each of the plural electric wires 21, 22, the output terminals 13c, 13d being connected to the plural electric wires 21, 22, the first and second reactors 14a, 14b being provided at the electric wire 21, 22, the connection electric wire 23 being positioned between the set of the first and second reactors 14a, 14b and the system power supply 20, the connection electric wire 23 connecting the two electric wires 21, 22 of the plural electric wires (21, 22), the condenser 14c being positioned between the set of the first and second reactors 14a, 14b and the system power supply 20, the condenser 14c being provided at the connection electric wire 23, the plural normally-open type first and second switches (the first and second parallel off relays 15a, 15b) being provided at the electric wires 21, 22, respectively, the normal-open type switch (the first and second parallel off relays 15a, 15b) being positioned between, the connection points of the electric wires 21, 22 and the connection electric wire 23, and the inverter 13, the loop circuit A including the two electric wires 21, 22, the connection electric wire 23, the first and second reactors 14a, 14b, the condenser 14c, and the switches (the first and second parallel off relays 15a, 15b, and the control unit 16 controlling the switch (the first and second parallel off relays 15a, 15b) to be open and closed. The control unit 16 includes the welding determination portion (the control unit 16) determining that the contact point of the first switch (the first and second parallel off relays 15a, 15b) is welded in a case where the current flows in the loop circuit A when the control unit 16 commands the first switch (the first and second parallel off relays 15a, 15b) of the switches (the first and second parallel off relays 15a, 15b) provided at the loop circuit A to be open, the first switch (the first and second parallel off relays 15a, 15b) serving as a subject of determination being determined whether the contact point is welded, and commands the second switch (the first and second parallel off relays 15a, 15b) to be closed and when the control unit 16 applies a voltage to the loop circuit A.

Accordingly, the normally-open type first and second parallel-off relays 15a, 15b are provided at the electric wires 21, 22, respectively, the electric wires 21, 22 that are positioned between the inverter 13 and the system power supply 20. The first and second parallel-off relays 15a, 15b are positioned between, the set of the connection points of the electric wires 21, 22 and the connection wire 23, and the inverter 13. The plural, first and second normally-open type parallel-off relay 15a, 15b are positioned on the loop circuit A. As a result of this construction, for example, when the control unit 16 commands the first switch (for example, the first parallel-off relay 15a (or the second parallel-off relay 15b)) to be open and commands the second switch (for example, the second parallel-off relay 15a (or the first parallel-off relay 15b)) to be closed, and when the voltage is applied to the loop circuit A in a case where the first switch (for example, the first parallel-off relay 15a (or the second parallel-off relay 15b)) of the first and second parallel-off relays 15a, 15b provided at the loop circuit A is welded and the second switch (for example, the second parallel-off relay 15a (or the first parallel-off relay 15b)) of the first and second parallel-off relays 15a, 15b is not welded, the current flows in the loop circuit A. Thus, the control unit 16 (the welding determination portion) determines that the contact point of the first switch (for example, the first parallel-off relay 15a (or the second parallel-off relay 15b)) is welded by the use of the components that are mounted to the system interconnection device 10. Accordingly, the system interconnection device 10 for the decentralized power supply can determine whether the first and second parallel-off relays 15a, 15b are welded separately, without an increase in cost.

The system interconnection device 10 for the decentralized power supply further includes the current sensor 32 being positioned on the loop circuit A and the voltage sensor 31 detecting the direct-current voltage inputted to the inverter 13. The control unit 16 includes the loop current determination portion (the control unit 16) determining whether the current flows in the loop circuit A. The loop current determination portion (the control unit 16) determines whether the current flows in the loop circuit A from detection results of at least one of the current sensor 32 and the voltage sensor 31. Accordingly, the control unit 16 (the loop current determination portion) securely determines whether the current flows in the loop circuit A by the use of the components that are mounted to the system interconnection device 10. Further, the control unit 16 securely determines whether the first and second parallel-off relays15a, 15b are welded.

The switch (the first and second parallel off relays 15a, 15b) is positioned between the set of the first and second reactors 14a, 14b and the connection point. Accordingly, because the voltage that flows at a position close to the system power supply 20 relative to the reactors 14a, 14b is lower than the voltage that flows at a position close to the inverter 13 relative to the reactors 14a, 14b, the withstand voltage of the first and second parallel-off relays 15a 15b can be low.

The control unit 16 changes the duty ratio of the voltage pulse in response to the phase of the voltage of the system power supply 20, the control unit 16 applying the voltage to the loop circuit A. Accordingly, by changing the duty ratio of the voltage pulse in response to the phase (and/or the voltage value) of the voltage of the system power supply 20 and by controlling the inverter 13 to apply the voltage to the loop circuit A, the control unit 16 securely determines whether the current flows in the loop circuit A by preventing the overcurrent by inhibiting the change of the current caused by the phase shift.

The system interconnection device 10 for the decentralized power supply further includes the converter 12 boosting the direct-current power generated by the power generation device (the fuel cell 11), the converter 12 outputting the direct-current power to the inverter 13 and a voltage sensor 31 detecting the direct-current voltage inputted to the inverter 13. The control unit 16 includes the loop current determination portion (step S104) determining whether the current flows in the loop circuit A. The loop current determination portion (step S104) determines whether the current flows in the loop circuit A from detection results of the voltage sensor 31. The welding determination portion (step S106) determines that the contact point of the first switch (the first and second parallel off relays 15a, 15b) is welded in a case where the direct-current voltage is equal to or greater than the predetermined voltage after the start-up of the converter 12. Accordingly, by determining that the contact point of one switch (for example, the first parallel-off relay 15a (or the second parallel-off relay 15b)) is welded in a case where the DC voltage comes to be equal to or greater than the predetermined voltage after the start-up of the converter 12, the control unit 16 securely determines whether the contact point is welded in a case where the control unit 16 determines whether the contact point is welded from the detection results of the DC voltage inputted from the converter 12 to the inverter 13.

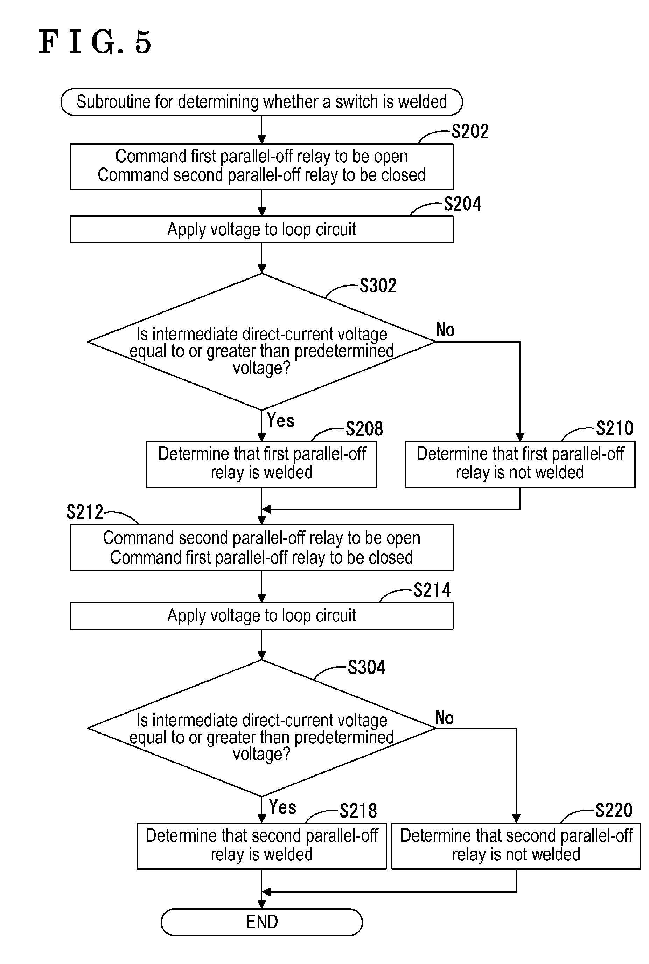

According to the aforementioned embodiment, the control unit 16 determines whether the current flows in the loop circuit A in response to the current value measured by the current sensor 32. Alternatively, the control unit 16 can determine whether the current flows in the loop circuit A in response to the voltage value measured by the voltage sensor 31. That is, as shown in the flowchart in Fig. 5, the control unit 16 operates steps S302 and S304 instead of steps S206 and S216 shown in the flowchart in Fig. 3. Specifically, in steps S302, 304, in a case where the voltage value received from the voltage sensor 31 is equal to or greater than the voltage threshold value, the control unit 16 determines that the voltage is detected by the voltage sensor 31, that is, the current flows in the loop circuit A. Alternatively, the control unit 16 may determine whether the current flows in the loop circuit A by measuring the intermediate DC voltage before the pulse-shaped voltage is applied to the loop circuit A and by determining whether the difference between the measured intermediate DC voltage before the pulse-shaped voltage is applied to the loop circuit A and the measured intermediate DC voltage after the pulse-shaped voltage is applied to the loop circuit A is equal to or greater than a predetermined difference. The control unit 16 may determine that the current flows in the loop circuit A from measurement results of the current sensor 32 and the voltage sensor 31.

According to the aforementioned embodiment, the first parallel-off relay 15a is positioned between, the connection point of the electric wire 21 and the connection electric wire 23, and the first reactor 14a. The second parallel-off relay 15b is positioned between, the connection point of the electric wire 22 and the connection electric wire 23, and the second reactor 14b. Alternatively, the parallel-off relays 15 may be positioned between the set of the first and second reactors 14a, 14b and the inverter 13 as long as being positioned between, the set of the connection points of the electric wires 21, 22 and the connection electric wire 23, and the inverter 13.

According to the aforementioned embodiment, the circuit configuration corresponds to a single-phase three-wire system. Alternatively, the circuit configuration may correspond to either a triple-phase three-wire system or a four-wire system. In such a case, the first reactor 14a (or the second reactor 14b) is provided at each of the electric wires 21, 22. The condenser 14c is positioned between the set of the first and second reactors 14a, 14b and the system power supply 20 and is provided at the connection electric wire 23 connecting two electric wires 21, 22. The parallel-off relays 15 are provided at the electric wires 21, 22, respectively.

According to the aforementioned embodiment, whether the parallel-off relays 15 are welded is determined after the start-up of the fuel cell 11 is completed and before the power generation is started. Alternatively, whether the parallel-off relays 15 are welded can be determined when restoring the power of the system power supply 20 (when restarting the system power supply 20) during an outage.

A system interconnection device (10) for a decentralized power supply includes a power generation device (11), an alternating-current system power supply (20), a plurality of electric wires (21, 22), an inverter (13), a reactor (14a, 14b), a connection electric wire (23), a condenser (14c), a plurality of normally-open type first and second switches (15a, 15b), a loop circuit (A) and a control unit (16) controlling the switch (15a, 15b) to be open and closed. The control unit (16) includes a welding determination portion (16) determining that a contact point of the first switch (15a, 15b) is welded in a case where a current flows in the loop circuit (A) when the control unit (16) commands the first switch (15a, 15b) of the switches (15a, 15b) provided at the loop circuit (A) to be open, the first switch (15a, 15b) serving as a subject of determination being determined whether the contact point is welded, and commands the second switch (15a, 15b) to be closed, and when the control unit (16) applies a voltage to the loop circuit (A).

## Claims

1. A system interconnection device (10) for a decentralized power supply, comprising:
a power generation device (11) generating a direct-current power;
an alternating-current system power supply (20);
a plurality of electric wires (21, 22) corresponding to a plurality of phases of the alternating-current system power supply (20), respectively;
an inverter (13) converting the direct-current power generated by the power generation device (11) into an alternating-current power, the inverter (13) outputting the alternating-current power from each of output terminals (13c, 13d) of the inverter (13) to each of the plurality of electric wires (21, 22), the output terminals (13c, 13d) being connected to the plurality of electric wires (21, 22);
a reactor (14a, 14b) being provided at the electric wire (21, 22);
a connection electric wire (23) being positioned between the reactor (14a, 14b) and the system power supply (20), the connection electric wire (23) connecting two electric wires (21, 22) of the plurality of electric wires (21, 22);
a condenser (14c) being positioned between the reactor (14a, 14b) and the system power supply (20), the condenser (14c) being provided at the connection electric wire (23);
a plurality of normally-open type first and second switches (15a, 15b) being provided at the electric wires (21, 22), respectively, the normal-open type switch (15a, 15b) being positioned between, a connection point of the electric wire (21, 22) and the connection electric wire (23), and the inverter (13);
a loop circuit (A) including the two electric wires (21, 22), the connection electric wire (23), the reactor (14a, 14b), the condenser (14c), and the switches (15a, 15b); and
a control unit (16) controlling the switch (15a, 15b) to be open and closed; wherein
the control unit (16) includes a welding determination portion (16) determining that a contact point of the first switch (15a, 15b) is welded in a case where a current flows in the loop circuit (A) when the control unit (16) commands the first switch (15a, 15b) of the switches (15a, 15b) provided at the loop circuit (A) to be open, the first switch (15a, 15b) serving as a subject of determination being determined whether the contact point is welded, and commands the second switch (15a, 15b) to be closed; and when the control unit (16) applies a voltage to the loop circuit (A).

2. The system interconnection device (10) for the decentralized power supply according to claim 1, further comprising:
a current sensor (32) being positioned on the loop circuit (A); and
a voltage sensor (31) detecting a direct-current voltage inputted to the inverter (13); wherein
the control unit (16) includes a loop current determination portion (16) determining whether the current flows in the loop circuit (A); and
the loop current determination portion (16) determines whether the current flows in the loop circuit (A) from detection results of at least one of the current sensor (32) and the voltage sensor (31).

3. The system interconnection device (10) for the decentralized power supply according to either claim 1 or 2, wherein the switch (15a, 15b) is positioned between the reactor (14a, 14b) and the connection point.

4. The system interconnection device (10) for the decentralized power supply according to any one of claims 1 to 3, wherein the control unit (16) changes a duty ratio of a voltage pulse in response to a phase of the voltage of the system power supply (20), the control unit (16) applying the voltage to the loop circuit (A).

5. The system interconnection device (10) for the decentralized power supply according to claim 1, further comprising:
a converter (12) boosting the direct-current power generated by the power generation device (11), the converter (12) outputting the direct-current power to the inverter (13); and
a voltage sensor (31) detecting a direct-current voltage inputted to the inverter (13);
wherein
the control unit (16) includes a loop current determination portion (16) determining whether the current flows in the loop circuit (A);
the loop current determination portion (16) determines whether the current flows in the loop circuit (A) from detection results of the voltage sensor (31); and
the welding determination portion (16) determines that the contact point of the first switch (15a, 15b) is welded in a case where the direct-current voltage is equal to or greater than a predetermined voltage after a start-up of the converter (12).
